# DEMANDE DE BREVET EUROPEEN

(11) **EP 4 439 439 A1**
(43) Date de publication de la demande: **02.10.2024**
(21) Numéro de dépôt: 24162813.0
(22) Date de dépôt: 12.03.2024
(51) Int. Cl.: G06Q 30/0601

(54) **COMMUNICATION ENTRE UN TERMINAL ET UN EQUIPEMENT DE COMMUNICATION, VIA UN RESEAU DE COMMUNICATION**

(30) Priorité: 28.03.2023 FR 2302945
(71) Demandeur: Orange, 92130 Issy-les-Moulineaux (FR)
(72) Inventeur: BOUDIN, Fabrice, 92326 Chatillon (FR); BRUN, Arnaud, 92326 Chatillon (FR)

(57) **Abrégé**

L'invention concerne un procédé de communication entre un terminal (TER) et un équipement de communication (EC), via un réseau de communication, ledit procédé comprenant :
- une transmission (S2) du terminal audit équipement, via ledit réseau, d'une requête de recherche d'un lieu public, ladite requête comprenant le type du lieu et au moins un mot caractérisant ledit type, ledit au moins un mot étant associé (S4) à une première valeur d'intensité attribuée à au moins un sens de l'être humain,
- une sélection (S6), dans ledit réseau, d'un/de lieu(x) public(s), pour le(s)quel(s) une deuxième valeur d'intensité dudit sens a été attribuée et dont la deuxième valeur s'approche le plus de la première valeur,
- en réponse à la requête, une réception (S9) dans le terminal, en provenance dudit équipement, d'un contenu comprenant des informations d'identification du/des lieu(x) sélectionné(s).

## Description

### Domaine de l'invention

Le domaine de l'invention est celui de la communication de données entre un terminal utilisateur et un équipement de communication, via un réseau de communication, en vue de recevoir dans le terminal un ou plusieurs contenus. On entend par contenu, du texte, du son (ou de l'audio), des images, des vidéos, ou toute combinaison de ces différents éléments.

L'invention s'applique notamment à la recherche de contenus, via un réseau de communication, par exemple Internet, et à la restitution de ces contenus sur un écran ou via un haut-parleur du terminal utilisateur.

### Art antérieur

De nombreux outils existants (plateformes accessibles via des sites internet et/ou des applications mobiles) permettent à un utilisateur d'obtenir des recommandations personnalisées (par exemple de restaurants, de films, etc.) en utilisant différents critères. A l'aide de son terminal, un utilisateur effectue une recherche, en indiquant certains critères. Par exemple, dans le cas d'une recherche d'un lieu public, notamment un restaurant, les critères utilisés sont par exemple la localisation souhaitée, les horaires d'ouverture souhaités, le taux de fréquentation, l'accessibilité aux personnes avec un handicap, etc. Le site internet « *TheFork* » (https://www.thefork.fr) propose un outil de recommandation de lieux publics tels que des restaurants, permettant la recommandation personnalisée et la réservation de restaurants, en utilisant différents critères, tels que par exemple le type de cuisine recherché (ex. française, japonaise, indienne, etc.), la localisation du restaurant, le prix moyen d'un déjeuner, etc.

Certains de ces outils de recommandation existants permettent à l'utilisateur de définir un profil personnel. Ce profil contient des informations relatives à l'utilisateur telles que son âge, son genre, son lieu de résidence, mais aussi parfois des informations relatives à son mode de vie (par exemple, ses loisirs), ou encore ses goûts (par exemple, ses goûts musicaux, littéraires, etc.), etc. L'inconvénient d'un tel profil est qu'il contient des données personnelles de l'utilisateur qui pourraient être exploitées de manière frauduleuse, telles que notamment l'âge, le genre, le lieu de résidence.

Les outils de recommandation précités sont toutefois limités en ce sens qu'ils ne permettent pas à un utilisateur de rechercher des lieux accueillant du public selon des considérations sensorielles basées sur au moins un des sens de l'être humain (odorat, vue, ouïe, goût, toucher), celles-ci étant souvent jugées aussi importantes par l'utilisateur que les autres critères habituellement utilisés, comme la localisation du lieu par exemple. Ainsi, l'utilisateur est incapable, avec les outils de recommandation de lieux publics actuels, se soumettre les exemples de requêtes suivantes :
- « *Je voudrais déjeuner avec mon amie, connaitriez-vous un restaurant calme en centre-ville ?* » ;
   « *J'ai horreur de cette forte odeur de chlore dans ma piscine ; en connaissez-vous une autre qui n'aurait pas ce problème ?* » ;
- « *Je déteste l'éclairage halogène dans ma salle de sport, quelqu'un peut-il me recommander une salle dans laquelle la lumière est moins agressive ?* ».

Par ailleurs, outre le fait que les outils de recommandation de lieux publics soient limités en matière de sélection de critères, ils sont aussi inadaptés à de nombreuses personnes qui ont des besoins, voire des exigences, sensoriels(elles) atypiques, du fait d'un handicap par exemple. Pour ces personnes, les outils habituels de recommandation de lieux publics, qui ne prennent en compte aucun critère sensoriel (par exemple le niveau de bruit ambiant recherché), ne sont pas satisfaisants. Parmi ces personnes, on peut citer à titre d'exemples :
- les personnes souffrant de photophobie, laquelle se caractérise par une sensibilité accrue à la lumière, voire une intolérance complète à celle-ci (une lumière, de trop forte intensité, peut causer chez ces personnes de l'inconfort visuel, des problèmes oculaires - sécheresse et/ou douleur au niveau des yeux par exemple-, des migraines, etc.) ;
- les personnes souffrant d'hyperacousie (également appelée hypersensibilité auditive), laquelle est une intolérance ou une faible tolérance aux bruits de l'environnement de tous les jours et est souvent associée à des acouphènes, des bourdonnements dans les oreilles ;
- les personnes souffrant d'hyperosmie se caractérisant par une augmentation de la capacité olfactive ;
- les personnes souffrant de parosmie, laquelle se caractérise par une distorsion d'une odeur vers une autre odeur, généralement désagréable ;
- les personnes ayant une faible tolérance à la nourriture relevée et pimentée ;
- etc.

Pour toutes ces personnes, un outil de recommandation de lieux selon des critères sensoriels serait particulièrement utile.

### Objet et résumé de l'invention

Un des buts de l'invention est de remédier à au moins un des inconvénients de l'état de la technique précité en proposant de rechercher à l'aide d'un terminal, via un réseau de communication, des lieux accueillant du public, une telle recherche étant mise en oeuvre à partir de critères sensoriels propres à l'utilisateur.

A cet effet, un objet de la présente invention concerne un procédé de communication entre un terminal et un équipement de communication, via un réseau de communication, au cours de laquelle le terminal requiert l'obtention d'un contenu auprès de l'équipement, un tel contenu étant relatif à un lieu accueillant du public. Ce procédé de communication est caractérisé en ce qu'il met en oeuvre :
- une transmission du terminal audit équipement, via ledit réseau, d'une requête de recherche d'au moins un lieu accueillant du public, ladite requête comprenant au moins un type de lieu et au moins un mot caractérisant le type de lieu, ledit au moins un mot étant associé à une première valeur d'intensité attribuée à au moins un sens de l'être humain,
- une sélection, dans ledit réseau, d'un ou de plusieurs lieux accueillant du public, pour le(s)quel(s) une deuxième valeur d'intensité dudit au moins un sens a été attribuée et dont la deuxième valeur s'approche le plus de la première valeur,
- en réponse à la requête, une réception dans le terminal, en provenance dudit équipement, d'un contenu comprenant des informations d'identification du ou des lieu(x) sélectionné(s).

Un tel procédé de communication permet avantageusement de mettre en oeuvre un outil de recommandation de contenus personnalisée, basé sur des critères sensoriels d'un utilisateur. Plus précisément, l'invention est capable de mettre en oeuvre une recommandation de lieux accueillant du public (ex : restaurants, salles de sport, boutiques, jardins publics, plages, etc.) à un utilisateur, sur la base de critères sensoriels qui sont propres à cet utilisateur et qui ont été définis au préalable par ce dernier. Un tel procédé est notamment utile pour des utilisateurs ayant des besoins, voire des exigences sensorielles atypiques, par exemple du fait d'un handicap, notamment des utilisateurs souffrant de photophobie, d'hyperacousie, d'hyperosmie, de parosmie, etc.

Selon un mode de réalisation particulier,
- la première valeur d'intensité dudit au moins un sens appartient à un profil d'un utilisateur du terminal, un tel profil contenant des préférences sensorielles de l'utilisateur relativement à un ou plusieurs sens de l'être humain,
- la deuxième valeur d'intensité dudit au moins un sens appartient à un profil d'au moins un lieu, un tel profil contenant des caractéristiques sensorielles propres au lieu, relativement à un ou plusieurs sens de l'être humain.

Un tel mode de réalisation permet de définir des critères sensoriels sous la forme d'un profil qui soit adapté aussi bien à l'utilisateur qu'au lieu accueillant du public, en étant basé sur des valeurs d'intensité d'au moins un sens de l'être humain.

Selon un autre mode de réalisation particulier, le profil de l'utilisateur du terminal est généré en une seule fois préalablement à la mise en oeuvre du procédé ou est généré en association avec chaque requête de recherche.

Un tel mode de réalisation permet de générer un profil :
- soit une fois pour toute, un tel profil étant alors systématiquement pris en compte à chaque recherche de lieux accueillant du public, soumise par l'utilisateur à l'aide de son terminal,
- soit de manière plus dynamique, à chaque recherche de lieux accueillant du public, soumise par l'utilisateur à l'aide de son terminal.

Selon un autre mode de réalisation particulier, le profil de l'utilisateur du terminal est généré à partir de réponses de l'utilisateur à un questionnaire numérique reçu par le terminal ou un autre terminal, le questionnaire interrogeant l'utilisateur sur ses préférences en rapport avec au moins un sens de l'être humain.

Un tel mode de réalisation permet à l'utilisateur de définir manuellement et avec précision ses préférences sensorielles, grâce au remplissage d'un questionnaire numérique qui lui sert de guide dans la définition de son profil sensoriel.

Selon un autre mode de réalisation particulier, le profil de l'utilisateur du terminal est généré à partir d'un ou plusieurs messages de l'utilisateur qui ont été publiés, via le réseau de communication, le ou les messages étant relatifs à un ou plusieurs lieux accueillant du public, en rapport avec au moins des sens de l'être humain.

Un tel mode de réalisation a pour avantage de ne pas solliciter l'utilisateur pour définir le profil sensoriel de ce dernier, un tel profil sensoriel étant généré automatiquement à l'aide de messages laissés par l'utilisateur, via le réseau de communication, les messages contenant des informations sur un ou plusieurs lieux accueillant du public, tels que par exemple un avis sur l'odeur de chlore dans une piscine, une publication sur une boutique très bruyante, une note attribuée à un parc public ayant une odeur de résine, etc.

Selon un autre mode de réalisation particulier, le profil de l'utilisateur du terminal est généré à partir d'une ou plusieurs traces numériques laissées par l'utilisateur, lors d'une ou plusieurs communications à l'aide du terminal, via le réseau de communication.

Un tel mode de réalisation a pour avantage de ne pas solliciter l'utilisateur pour définir le profil sensoriel de ce dernier, un tel profil sensoriel étant généré automatiquement à l'aide de traces numériques laissées par l'utilisateur, via le réseau de communication, telles que par exemple des cookies, des données du journal d'appels du terminal de l'utilisateur, des informations de géolocalisation de l'utilisateur, etc. De telles traces numériques sont destinées à être corrélées à des valeurs d'intensité d'au moins un sens définissant ainsi le profil sensoriel de l'utilisateur.

Selon un autre mode de réalisation particulier, la première valeur d'intensité dudit au moins un sens du profil de l'utilisateur du terminal, respectivement la deuxième valeur d'intensité dudit au moins un sens du profil dudit au moins un lieu, sont variables ou invariables dans le temps.

Les différents modes ou caractéristiques de réalisation précités peuvent être ajoutés indépendamment ou en combinaison les uns avec les autres, au procédé de communication tel que défini ci-dessus.

L'invention concerne également un procédé de communication entre un terminal de communication et un équipement de communication, via un réseau de communication, au cours de laquelle le terminal requiert l'obtention d'un contenu auprès dudit équipement, ledit contenu étant relatif à un lieu accueillant du public. Un tel procédé de communication est caractérisé en ce qu'il met en oeuvre, au niveau du terminal :
- une transmission audit équipement de communication, via ledit réseau, d'une requête de recherche d'au moins un lieu accueillant du public, ladite requête comprenant au moins un type de lieu accueillant du public et au moins un mot caractérisant ledit type de lieu, ledit au moins un mot étant associé à une première valeur d'intensité attribuée à au moins un sens de l'être humain,
- en réponse à la requête, une réception en provenance dudit équipement, via ledit réseau, d'un contenu comprenant des informations d'identification d'un ou de plusieurs lieux pour le(s)quel(s) une deuxième valeur d'intensité dudit au moins un sens a été attribuée et dont la deuxième valeur s'approche le plus de la première valeur.

L'invention concerne également un terminal de communication adapté pour mettre en oeuvre une communication, via un réseau de communication, avec un équipement de communication, au cours de laquelle le terminal requiert l'obtention d'un contenu auprès dudit équipement, ledit contenu étant relatif à un lieu accueillant du public. Un tel terminal est caractérisé en ce qu'il est configuré pour :
- transmettre audit équipement de communication, via ledit réseau, une requête de recherche d'au moins un lieu accueillant du public, ladite requête comprenant au moins un type de lieu accueillant du public et au moins un mot caractérisant ledit type de lieu, ledit au moins un mot étant associé à une première valeur d'intensité attribuée à au moins un sens de l'être humain,
- en réponse à la requête, recevoir en provenance dudit équipement, via ledit réseau, un contenu comprenant des informations d'identification d'un ou de plusieurs lieux pour le(s)quel(s) une deuxième valeur d'intensité dudit au moins un sens a été attribuée et dont la deuxième valeur s'approche le plus de la première valeur. L'invention concerne également un équipement de communication, adapté pour mettre en oeuvre une communication, via un réseau de communication, avec un terminal de communication, au cours de laquelle le terminal requiert l'obtention d'un contenu auprès dudit équipement, ledit contenu étant relatif à un lieu accueillant du public.

Un tel équipement est caractérisé en ce qu'il est configuré pour :
- recevoir en provenance du terminal, via ledit réseau, une requête de recherche d'au moins un lieu accueillant du public, ladite requête comprenant au moins un type de lieu accueillant du public et au moins un mot caractérisant ledit type de lieu, ledit au moins un mot étant associé à une première valeur d'intensité attribuée à au moins un sens de l'être humain,
- sélectionner, dans ledit réseau, un ou plusieurs lieux accueillant du public, pour le(s)quel(s) une deuxième valeur d'intensité dudit au moins un sens a été attribuée et dont la deuxième valeur s'approche le plus de la première valeur,
- en réponse à la requête, transmettre audit terminal, via ledit réseau, un contenu comprenant des informations d'identification du ou des lieu(x) accueillant du public sélectionné(s).

L'invention concerne également un programme d'ordinateur comportant des instructions pour la mise en oeuvre du procédé communication conforme à l'invention, selon l'un quelconque des modes particuliers de réalisation décrits précédemment, lorsque ledit programme est exécuté par un processeur.

De telles instructions peuvent être stockées durablement dans un support mémoire non transitoire du dispositif de réception de contenu mettant en oeuvre le procédé de communication selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile, un disque dur ou un SSD.

D'autre part, le support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par un exemple un réseau de type Internet. Alternativement, le support d'enregistrement peut être un circuit intégré dans lequel le programme est incorporé, le circuit étant adapté pour exécuter ou pour être utilisé dans l'exécution du procédé de communication précité.

Selon un exemple de réalisation, la présente technique est mise en oeuvre au moyen de composants logiciels et/ou matériels. Dans cette optique, le terme « dispositif » ou « module » peut correspondre dans ce document aussi bien à un composant logiciel, qu'à un composant matériel ou à un ensemble de composants matériels et logiciels.

### Brève description des dessins

D'autres caractéristiques et avantages apparaîtront à la lecture de modes de réalisation particuliers de l'invention, donnés à titre d'exemples illustratifs et non limitatifs, et des dessins annexés, parmi lesquels :
La [Fig. 1] représente une architecture dans laquelle est mis en oeuvre le procédé de communication, selon un mode de réalisation particulier de l'invention,
La [Fig. 2] représente un terminal de communication, selon un mode de réalisation particulier de l'invention, tel que mis en oeuvre dans l'architecture de la figure 1,
La [Fig. 3] représente un équipement de communication, selon un mode de réalisation particulier de l'invention, tel que mis en oeuvre dans l'architecture de la figure 1,
La [Fig. 4A] représente les principales actions mises en oeuvre dans le procédé de communication selon un mode de réalisation particulier de l'invention, tel que mis en oeuvre dans l'architecture de la figure 1,
La [Fig. 4B] représente les principales actions mises en oeuvre dans le procédé de communication selon un mode de réalisation particulier de l'invention, tel que mis en oeuvre dans l'architecture de la figure 1.

### Description détaillée de plusieurs modes de réalisation de l'invention

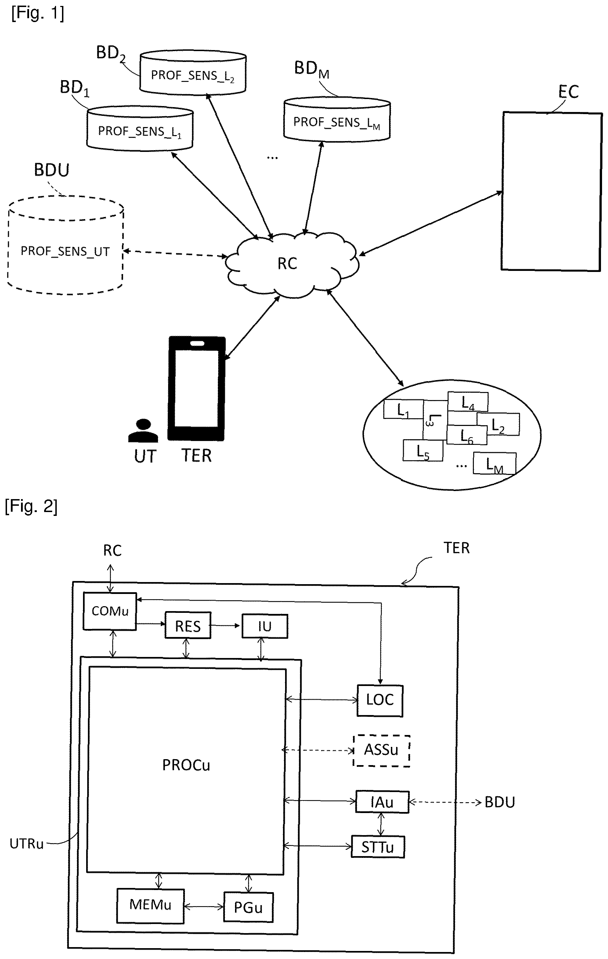

La figure 1 représente une architecture dans laquelle est mis en oeuvre un procédé de communication, selon un mode de réalisation de l'invention.

Une telle architecture comprend :
- un terminal TER d'un utilisateur UT qui souhaite chercher, à l'aide de son terminal TER, un ou plusieurs lieux L₁, L₂, ..., L_{M} (M≥1) accueillant du public, conformément à un ou plusieurs critères sensoriels propres à l'utilisateur UT ;
- un équipement de communication EC avec lequel communique le terminal TER via un réseau de communication RC pour effectuer sa recherche ;
- un module de stockage BDU dans lequel est stocké un profil sensoriel PROF_SENS_UT associé à l'utilisateur UT,
- un ou plusieurs modules de stockage BD₁, BD₂, ..., BD_{M} dans lesquels sont stockés des profils sensoriels PROF_SENS_L₁, PROF_SENS_L₂, ..., PROF_SENS_L_{M} associés respectivement aux lieux L₁, L₂, ..., L_{M} accueillant du public.

Le module de stockage BDU est optionnel. Pour cette raison, il est représenté en pointillé sur la figure 1.

Le terminal TER est par exemple un smartphone (« *téléphone intelligent* »), une tablette, une montre connectée, un ordinateur, etc.

L'équipement de communication EC est par exemple un serveur, une plateforme, etc. et est configuré pour recevoir en provenance du terminal TER, via le réseau RC, une requête en recherche d'au moins un lieu accueillant du public.

Dans l'exemple représenté, le module de stockage BDU est une base de données installée dans le réseau de communication RC ou dans un autre réseau (non représenté) communicant avec le réseau de communication RC. Dans un autre exemple de réalisation, le module de stockage BDU pourrait être intégré au terminal TER.

Dans l'exemple représenté, les modules de stockage BD₁, BD₂, ..., BD_{M} sont des bases de données installées dans le réseau RC ou dans un autre réseau (non représenté) communicant avec le réseau de communication RC.

Le réseau de communication RC est implémenté selon par exemple les technologies de radiotéléphonie cellulaire (3G, 4G, 5G par exemple), IP (« *Internet Protocol* » en anglais), circuit, WiFi, etc., ou une combinaison de ces technologies.

Par « *sensoriel* », on entend ce qui est relatif à au moins un sens de l'être humain, tel que l'odorat, la vue, l'ouïe, le goût, le toucher.

Dans la suite de la description, pour des raisons de simplification, « *lieu accueillant du public* » sera appelé « *lieu public* ». Il peut s'agir d'un lieu public en extérieur, par exemple un jardin public, un court de tennis, une place dans un quartier d'une ville, etc. ou un lieu public en intérieur, par exemple un restaurant, une salle de sport, une boutique, un musée, etc.

On va maintenant décrire, en référence à la figure 2, la structure simplifiée du terminal TER.

Un tel terminal a l'architecture classique d'un terminal portable de type smartphone, d'une tablette, d'un ordinateur, ou autre.

A cet effet, le terminal TER comprend :
- une interface utilisateur IU configurée pour saisir textuellement ou oralement des informations ou restituer des informations (clavier, souris, microphone, écran, haut-parleur, appareil photo, etc.),
- une interface de communication COMu configurée pour communiquer, via le réseau de communication RC de la figure 1, avec l'équipement de communication EC,
- un module LOC de géolocalisation qui fonctionne par exemple selon la technologie GPS (« *Global Positioning System* » en anglais), Galileo, WiFi, GSM (« *Global System for Mobile Communications* » en anglais), IP, etc.,
- une mémoire STTu configurée pour stocker :
   -- des données relatives à l'utilisation du terminal TER, par exemple des cookies, des données d'un journal d'appel, un ou plusieurs messages postés par l'utilisateur sur un réseau social, des réactions ou avis de l'utilisateur publiés sur Internet, et
   -- éventuellement une ou plusieurs valeurs d'intensité V_{1,1}, V_{2,1}, ..., V_{K,1} attribuées à au moins un sens SN1 de l'être humain, avec K≥1,
- une interface IAu d'accès à la mémoire STT et éventuellement à la base BDU de données de profil sensoriel de l'utilisateur UT, dans le cas où cette base de données existe,
- éventuellement un module d'association ASSu configuré pour associer au moins un mot saisi dans la requête à au moins une des valeurs d'intensité V_{1,1}, V_{2,1}, ..., V_{K,1} attribuées à au moins un sens SN1 de l'être humain,
- un module RES de restitution de contenu configuré pour restituer un contenu visuel sur l'écran de l'interface IU ou un contenu sonore, via un ou plusieurs hauts-parleurs de l'interface IU.

Le module d'association ASSu étant optionnel, il est représenté en pointillé sur la figure 2.

Dans l'exemple représenté, la mémoire STTu est installée dans le terminal TER. Alternativement, la mémoire STTu peut être rendue accessible par le terminal TER, via le réseau RC ou tout autre réseau sans fil ou non, selon l'implémentation envisagée, par exemple si le terminal TER n'a pas les ressources matérielles et logicielles nécessaires pour stocker ces informations.

A l'initialisation, les instructions de code du programme d'ordinateur Pgu sont par exemple chargées dans une mémoire RAM (non représentée) avant d'être exécutées par le processeur PROCu. Le processeur PROCu de l'unité de traitement UTRu met notamment en oeuvre les actions suivantes, dans le cadre du procédé de communication qui va être décrit ci-dessous, selon les instructions du programme d'ordinateur Pgu :
- géolocalisation de l'utilisateur UT à l'aide du module LOC,
- saisie du profil PROF_SENS_UT associé à l'utilisateur UT, via l'interface IU,
- saisie d'une requête de recherche d'un lieu public via l'interface lU, ladite requête comprenant au moins un type de lieu et au moins un mot caractérisant le type de lieu,
- stockage, dans la mémoire STTu ou dans la base de données BDU, via l'interface d'accès lAu, du profil sensoriel PROF_SENS_UT associé à l'utilisateur UT, ledit profil comprenant une ou plusieurs valeurs d'intensité V_{1,1}, V_{2,1}, ..., V_{K,1} attribuées à au moins un sens SN1 de l'être humain,
- éventuellement association dudit au moins un mot à une valeur d'intensité, parmi les valeurs d'intensité V_{1,1}, V_{2,1}, ..., V_{K,1}, à l'aide du module d'association ASSu,
- transmission de la requête de recherche à l'équipement de communication EC, via le réseau RC, à l'aide de l'interface COMu,
- réception en provenance dudit équipement EC, via l'interface COMu, d'un contenu comprenant des informations d'identification du ou des lieu(x) public(s) sélectionné(s) par l'équipement de communication EC,
- restitution du contenu, à l'aide du module RES de restitution de contenu, via l'interface utilisateur IU.

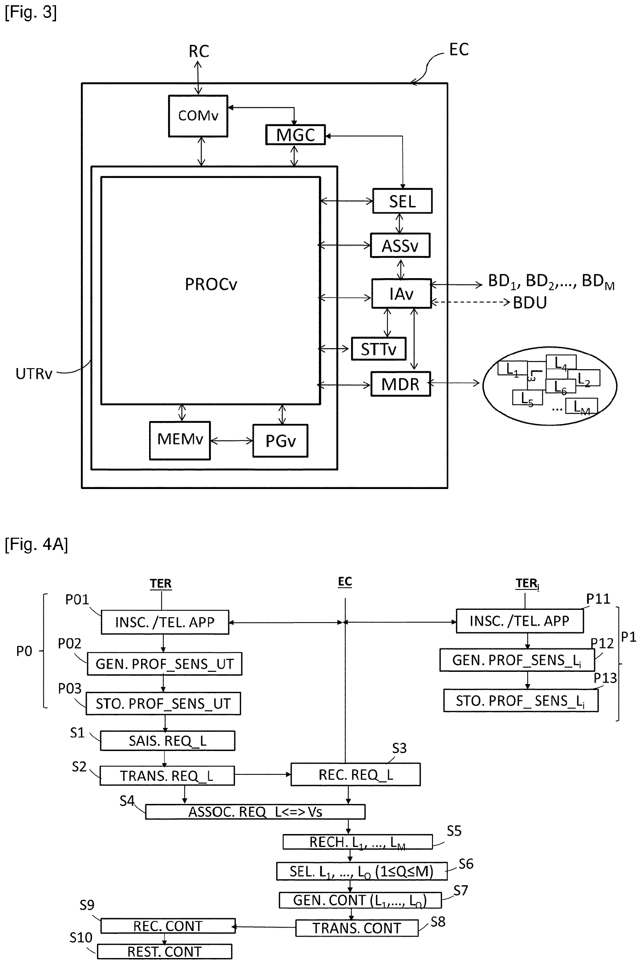

On va maintenant décrire, en référence à la figure 3, la structure simplifiée de l'équipement de communication EC précité.

L'équipement EC comprend :
- une interface de communication COMv configurée pour communiquer, via le réseau de communication RC de la figure 1, avec le terminal TER,
- un module de recherche MDR configuré pour rechercher, dans le réseau RC, un ou plusieurs lieux publics L₁, ..., L_{M} qui a/ont un type qui correspond au type de lieu public contenu dans une requête de recherche de lieu public envoyée par le terminal TER et qui ont un profil sensoriel associé au type de lieu public,
- un module de sélection SEL configuré pour sélectionner, parmi le/les lieu(x) public(s) trouvé(s) par le module de recherche MDR, celui/ceux correspondant le plus au profil sensoriel de l'utilisateur UT,
- une mémoire STTv configurée pour stocker le type de lieu contenu dans la requête et pour stocker soit ledit au moins un mot, soit une ou plusieurs valeurs d'intensité V₁₁, V₂₁, ..., V_{K1} attribuées à au moins un sens SN1 de l'être humain qui ont été associées audit au moins un mot,
- une interface lAv d'accès :
   -- à la mémoire STTv,
   -- aux base de données BD₁, BD₂, ..., BD_{M},
   -- et éventuellement à la base de données BDU de profil sensoriel de l'utilisateur UT, dans le cas où cette base de données existe,
- éventuellement un module d'association ASSv configuré pour associer au moins un mot saisi dans la requête à au moins une des valeurs d'intensité V_{1,1}, V_{2,1}, ..., V_{K,1} attribuées à au moins un sens SN1 de l'être humain,
- un module MGC de génération de contenu configuré pour générer un contenu comprenant des informations d'identification du/des lieu(x) public(s) sélectionné(s) comme correspondant le plus au profil sensoriel de l'utilisateur UT.

Dans l'exemple représenté, une telle mémoire STTv est installée dans l'équipement de communication EC. Alternativement, la mémoire STTv peut être rendue accessible par l'équipement de communication EC, via le réseau RC ou tout autre réseau sans fil ou non, selon l'implémentation envisagée, par exemple si l'équipement EC n'a pas les ressources matérielles et logicielles nécessaires pour stocker ces informations.

Le module ASSv étant optionnel, il est représenté en pointillé sur la figure 3.

Selon un mode particulier de réalisation de l'invention, les actions exécutées par l'équipement de communication EC sont mises en oeuvre par des instructions d'un programme d'ordinateur PGv. Pour cela, l'équipement EC a l'architecture classique d'un ordinateur et comprend notamment une mémoire MEMv, une unité de traitement UTRv, équipée par exemple d'un processeur PROCv, et pilotée par le programme d'ordinateur PGv stocké en mémoire MEMv. Le programme d'ordinateur PGv comprend des instructions pour effectuer les actions suivantes, dans le cadre du procédé de communication qui va être décrit ci-dessous, selon les instructions du programme d'ordinateur PGv :
- réception d'une requête de recherche en provenance du terminal TER, via l'interface de communication COMv, ladite requête comprenant au moins un type de lieu, au moins un mot caractérisant le type de lieu et/ou une ou plusieurs valeurs d'intensité V_{1,1}, V_{2,1}, ..., V_{K,1} attribuées à au moins un sens SN1 de l'être humain,
- stockage éventuel, dans la mémoire STTv dudit type de lieu, via l'interface d'accès lAv, dudit au moins un mot et/ou de la ou des valeurs d'intensité V_{1,1}, V_{2,1}, ..., V_{K,1} attribuées à au moins un sens SN1 de l'être humain,
- accès à la base de données BDU, via l'interface d'accès IAu, si la ou les valeurs d'intensité V_{1,1}, V_{2,1}, ..., V_{K,1} ne sont pas contenues dans la requête de recherche et association, via le module ASSv, dudit au moins un mot à au moins une des valeurs d'intensité V_{1,1}, V_{2,1}, ..., V_{K,1} attribuées à au moins un sens SN1 de l'être humain,
- accès à une ou plusieurs des bases de données BD₁ à BD_{M}, via l'interface d'accès lAv,
- recherche dans le réseau RC, via le module de recherche MDR, du ou des lieu(x) public(s) L₁, ..., L_{M} qui a/ont un type qui correspond au type de lieu public contenu dans la requête de recherche,
- sélection, par le module SEL, parmi le/les lieu(x) public(s) trouvé(s) par le module de recherche MDR, du ou des lieu(x) public(s) correspondant le plus au profil sensoriel de l'utilisateur UT,
- génération, par le module MGC, d'un contenu comprenant des informations d'identification du/des lieu(x) public(s) sélectionné(s) comme correspondant le plus au profil sensoriel de l'utilisateur UT,
- transmission au terminal TER, via le réseau RC, du contenu généré, à l'aide de l'interface de communication COMv.

A l'initialisation, les instructions de code du programme d'ordinateur PGv sont par exemple chargées dans une mémoire RAM (non représentée) avant d'être exécutées par le processeur PROCv. Le processeur PROCv de l'unité de traitement UTRv met notamment en oeuvre les actions précitées, selon les instructions du programme d'ordinateur PGv.

On décrit maintenant, en relation avec la figure 4A, ensemble les figures 1 à 3, le déroulement d'un procédé de communication, selon un mode de réalisation particulier de l'invention.

Au cours d'une phase préalable P0 de configuration propre à l'utilisateur UT, ce dernier se connecte en P01, via le réseau RC, à l'équipement de communication EC, pour s'inscrire au service de recherche de lieux publics à l'aide de critères sensoriels. L'utilisateur peut se connecter à l'aide de son terminal TER ou de tout autre terminal de communication dédié, tel que par exemple un ordinateur personnel de type PC, une tablette, etc.

L'utilisateur UT s'inscrit alors à ce service en fournissant notamment un identifiant de communication associé à son terminal de communication TER, tel que par exemple un numéro MSISDN (en anglais « *Mobile Station International Subscriber Directory Number* »), un identifiant de messagerie instantanée, un identifiant de messagerie électronique, une adresse MAC (en anglais « *Media Access Control* »), etc. Comme lors de toute inscription à un service, l'utilisateur UT peut également renseigner des informations personnelles, telles que par exemple son âge, son genre, son lieu de résidence, etc.

De manière alternative ou en complément de cette opération, l'utilisateur UT peut télécharger dans son terminal TER, en provenance de l'équipement de communication EC, une application APP dédiée à la recherche de lieux publics selon des critères sensoriels.

Dans cette phase préalable P0 de configuration, l'utilisateur UT peut procéder en P02, via une interface dédiée proposée par l'équipement de communication EC ou l'application APP, à la génération de son profil sensoriel PROF_SENS_UT. Un tel profil contient des informations caractérisant les préférences de l'utilisateur UT relativement à au moins un sens de l'être humain, parmi les cinq sens de l'être humain suivants :
- SN 1 : Odorat,
- SN2: Vue,
- SN3: Ouïe,
- SN4: Goût,
- SN5: Toucher.

Pour le sens odorat SN1, l'utilisateur UT attribue k1 valeurs d'intensité V_{1,1}, V_{2,1}, ..., V_{k1,1} à respectivement C_{1,1}, C_{2,1}, ..., C_{k1,1} catégories d'odeur.

Pour le sens vue SN2, l'utilisateur UT attribue k2 valeurs d'intensité V_{1,2}, V_{2,2}, ..., V_{k2,2} à respectivement C_{1,2}, C_{2,2}, ..., C_{k2,2} catégories visuelles.

Pour le sens ouïe SN3, l'utilisateur UT attribue k3 valeurs d'intensité V_{1,3}, V_{2,3}, ..., V_{k3,3} à respectivement C_{1,3}, C_{2,3}, ..., C_{k3,3} catégories de son.

Pour le sens goût SN4, l'utilisateur UT attribue k4 valeurs d'intensité V_{1,4}, V_{2,4}, ..., V_{k4,4} à respectivement C_{1,4}, C_{2,4}, ..., C_{k4,4} catégories de goût.

Pour le sens toucher SN5, l'utilisateur UT attribue k5 valeurs d'intensité V_{1,5}, V_{2,5}, ..., V_{k5,5} à respectivement C_{1,5}, C_{2,5}, ..., C_{k5,5} catégories de toucher.

Le profil sensoriel PROF_SENS_UT associé à l'utilisateur UT est généré par exemple sous la forme du tableau [TAB] suivant :

| SN1 Odorat | SN2 Vue | SN3 Ouïe | SN4 Goût | SN5 Toucher |
|---|---|---|---|---|
| - C_{1,1} : Parfumé | - C_{1,2} : Lampes àincandescence | - C_{1,3} : Silence | - C_{1,4} : Acide | - C_{1,5} : Texture |
| - V_{1,1} = 10/10 | -V_{1,2}=8/10 | - 0 dB ≤V_{1,3} < 10 dB | - V_{1,4} = 0/10 | - V_{1,5} > 8/10 |
| - C_{2,1} : Boisé, résineux | | - C_{2,3} : Calme, chuchotements en extérieur | - C2,4 : Amer | |
| - V_{2,1} = 8/10 | | | - V_{1,4} = 2/10 | |
| | | -10 dB ≤V_{2,3 <}20 dB | | |
| - C_{3,1} : Fruité, autre que citron | - C_{2,2} : Lampes halogènes | - C_{3,3} : campagne, sans vent dans les arbres | - C_{3,4} : Gras | - C_{2,5} : Consistance |
| - V_{3,1} = 8/10 | - V_{2,2} = 0/10 | -20 dB ≤V_{3,3} <30 dB | - V_{3,4} = 8/10 | - V_{2,5} < 2/10 |
| - C_{4,1} = Ecœurant | | - C_{4,3} : campagne, | - C_{4,4} : Salé | |
| - V_{4,1} = 1/10 | | brise légère -30 dB ≤V_{4,3} <40 dB | - V_{4,4} = 9/10 | |
| - C_{5,1} : Chimique | - C_{3,2} : Lampesfluocompactes | - C_{5,3} : tranquillité enintérieur | - C_{5,4} : Sucré | - C_{3,5} : Chaleur |
| - V_{5,1} = 3/10 | - V_{3,2} = 5/10 | -40 dB ≤V_{3,3} <50 dB | - V_{5,4} = 5/10 | - V_{3,5} > 7/10 |
| - C_{6,1} : Mentholé, menthe poivrée | | - C_{6,3} : calme en intérieur | - C_{6,4} : Umami | |
| - V_{6,1} = 9/10 | | - 50 dB ≤V_{3,3} <60 dB | - V_{6,4} = 8/10 | |
| - C_{7,1} : Sucré | - C_{4,2} : Lampes LED | - C_{7,3} : roulement de voitures | | |
| - V_{7,1} = 8/10 | | | | |
| | - V_{4,2} = 8/10 | - 60 dB ≤V_{7,3} <70 dB | | |
| - C_{8,1} : Pop-corn | | - C_{8,3} : motos ou tracteurs à proximité | | |
| - V_{8,1} = 5/10 | | | | |
| | | - 70 dB ≤V_{8,3} <100 dB | | |
| - C_{9,1} : Citronné | | - C_{9,3} : concert | | |
| - V_{9,1} = 2/10 | | | | |
| - C_{10,1} : Acre, pourri | | - V_{9,3} ≥100 dB | | |
| - V_{10,1} = 0/10 | | | | |

Dans le tableau [TAB], le profil sensoriel relatif au sens odorat SN1 est par exemple modélisé selon 10 catégories C_{1,1} à C_{10,1}, l'utilisateur UT attribuant à chacune de ces 10 catégories une note V_{1,1} à V_{10,1} comprise entre 0 et 10 et caractérisant l'intensité de chaque catégorie. Par exemple, la valeur V_{2,1} = 8/10 attribuée à la catégorie C_{2,1} « *boisé, résineux »* signifie que l'utilisateur UT aime beaucoup la catégorie d'odeur *« boisé, résineux* ».

Dans le tableau [TAB], le profil sensoriel relatif au sens vue SN2 est par exemple modélisé selon 4 catégories C_{1,2} à C_{4,2}, l'utilisateur UT attribuant à chacune de ces 4 catégories une note V_{1,2} à V_{4,2} comprise entre 0 et 10 et caractérisant l'intensité de chaque catégorie. Par exemple, la valeur V_{2,2} = 0/10 attribuée à la catégorie C_{2,2} « *lampes halogènes »* signifie que l'utilisateur UT n'aime pas du tout la catégorie « *lampes halogènes* ».

Dans le tableau [TAB], le profil sensoriel relatif au sens ouïe SN3 est par exemple modélisé selon 9 catégories C_{1,3} à C_{9,3}, l'utilisateur UT attribuant à chacune de ces 9 catégories une valeur d'intensité encadrée par deux valeurs en décibels. Par exemple, la valeur 10 dB ≤V_{2,3} <20 dB attribuée à la catégorie C_{2,3} « *Calme, chuchotements en extérieur* » signifie que l'utilisateur UT privilégie davantage les lieux publics en extérieur avec une ambiance sonore faible.

Dans le tableau [TAB], le profil sensoriel relatif au sens goût SN4 est par exemple modélisé selon 6 catégories C_{1,4} à C_{6,4} qui correspondent respectivement aux 6 saveurs de base, l'utilisateur UT attribuant à chacune de ces 6 catégories une note V_{1,4} à V_{6,4} comprise entre 0 et 10 et caractérisant l'intensité de chaque catégorie. Par exemple, la valeur V_{1,4} = 0/10 attribuée à la catégorie C_{1,4} « *acide* » signifie que l'utilisateur UT exècre cette saveur.

Dans le tableau [TAB], le profil sensoriel relatif au sens toucher SN5 cible le toucher par la main et est par exemple modélisé selon 3 catégories C_{1,3} à C_{3,3} qui correspondent respectivement à :
- la texture d'un élément (ex : le mobilier d'un lieu, les équipements d'un lieu, etc.) que l'on évalue par effleurement (ex : piquant, lisse, doux, rugueux, etc.),
- la consistance de l'élément que l'on évalue par pression (ex : dur, mou, moelleux, etc.),
- la température (ex : chaud, tiède, froid).

L'utilisateur UT attribue à chacune de ces 3 catégories une note V_{1,5} à V_{3,5} comprise entre 0 et 10 et caractérisant l'intensité de chaque catégorie. Par exemple, les valeurs V_{1,5} > 8/10 attribuée à la catégorie C_{1,5} « *texture* », V_{2,5} < 2/10 attribuée à la catégorie C_{2,5} « *consistance* », V_{3,5} > 7/10 attribuée à la catégorie C_{3,5} « *chaleur* » signifient que l'utilisateur UT apprécie des lieux publics rustiques, avec un côté chaleureux.

Le profil PROF_SENS_UT tel que modélisé ci-dessus dans le tableau [TAB] peut être généré une fois pour toute et être utilisé tel quel lors de la mise en oeuvre du procédé de communication qui va être décrit ci-dessous. Par exemple, s'agissant du sens ouïe SN3, un utilisateur UT peut détester systématiquement les endroits bruyants, et cela, quelle que soit l'heure de la journée.

Dans une variante de réalisation, le profil PROF_SENS_UT peut être variable dans le temps. A cet effet, l'utilisateur UT peut par exemple générer un profil PROF_SENS_UT pour une ou plusieurs tranches horaires dans la journée, par exemple les trois profils suivants :
- PROF_SENS_Uta pour la tranche horaire 8h-12h et 14h-19h ;
- PROF_SENS_Utb pour la tranche 12h-14h ;
- PROF_SENS_Utc pour la tranche horaire 19h-3h.

Selon les choix de l'utilisateur UT, chacun de ces 3 profils peut comprendre par exemple un nombre de sens de l'être humain inférieur aux 5 sens inscrits dans le tableau [TAB], un nombre de catégories par sens inférieur à celui inscrit dans le tableau [TAB], et des notes par catégorie différentes de celles attribuées dans le tableau [TAB].

Ainsi par exemple, un utilisateur UT peut apprécier qu'un lieu soit relativement calme, par exemple un restaurant de quartier que l'utilisateur UT fréquente à sa pause déjeuner lors de sa journée de travail, ou au contraire relativement bruyant le soir, lorsqu'il fréquente un restaurant, un bar, etc. avec des amis.

A l'issue de l'étape préalable P02 de génération du profil sensoriel PROF_SENS_UT de l'utilisateur UT, le tableau [TAB] est stocké en P03 dans la base de données BDU et/ou dans la mémoire STTu du terminal TER.

De manière similaire à la phase préalable P0 de configuration propre à l'utilisateur UT, une phase préalable P1 de configuration propre à un administrateur/gérant ou propriétaire d'un lieu public Li donné, parmi les M lieux publics précités, est mise en oeuvre. A cet effet, l'administrateur/gérant se connecte en P11, via le réseau RC, à l'équipement de communication EC, pour inscrire le lieu public Li au service de recherche de lieux publics à l'aide de critères sensoriels. L'administrateur/gérant peut se connecter à l'aide d'un terminal de communication TERi, tel que par exemple un smartphone, un ordinateur personnel de type PC, une tablette, etc.

L'utilisateur UT s'inscrit alors à ce service en fournissant notamment des informations relatives au lieu public Lᵢ, telles que par exemple l'adresse, les horaires d'ouverture, les tarifs, etc.

De manière alternative ou en complément de cette opération, l'administrateur/gérant peut télécharger dans son terminal TERi, en provenance de l"équipement de communication EC, une application APP dédiée à la gestion du lieu public Li dans le cadre du procédé de communication selon l'invention.

Dans cette phase préalable P1 de configuration, l'administrateur/gérant peut procéder en P12, via une interface dédiée proposée par l'équipement de communication EC ou l'application APP, à la génération d'un profil sensoriel PROF_SENS_Li associé au lieu public Li. Selon l'invention, un tel profil contient des informations caractérisant le lieu public Li relativement à au moins un sens de l'être humain, parmi les cinq sens de l'être humain suivants :
- SN1 : Odorat,
- SN2 : Vue,
- SN3 : Ouïe,
- SN4 : Goût,
- SN5 : Toucher.

Pour le sens odorat SN1, l'administrateur/gérant attribue k1 valeurs d'intensité V_{1,1}, V_{2,1}, ..., V_{k1,1} à respectivement C_{1,1}, C_{2,1}, ..., C_{k1,1} catégories d'odeur.

Pour le sens vue SN2, l'administrateur/gérant attribue k2 valeurs d'intensité V_{1,2}, V_{2,2}, ..., V_{k2,2} à respectivement C_{1,2}, C_{2,2}, ..., C_{k2,2} catégories visuelles.

Pour le sens ouïe SN3, l'administrateur/gérant attribue k3 valeurs d'intensité V_{1,3}, V_{2,3}, ..., V_{k3,3} à respectivement C_{1,3}, C_{2,3}, ..., C_{k3,3} catégories de son.

Pour le sens goût SN4, l'administrateur/gérant attribue k4 valeurs d'intensité V_{1,4}, V_{2,4}, ..., V_{k4,4} à respectivement C_{1,4}, C_{2,4}, ..., C_{k4,4} catégories de goût.

Pour le sens toucher SN5, l'administrateur/gérant attribue k5 valeurs d'intensité V_{1,5}, V2,5, ..., V_{k5,5} à respectivement C_{1,5}, 62,5, ..., C_{k5,5} catégories de toucher.

Le profil sensoriel PROF_SENS_Li associé au lieu Li est généré par exemple sous la forme du tableau [TABᵢ] suivant :

| SN1 Odorat | SN2 Vue | SN3 Ouïe | SN4 Goût | SN5 Toucher |
|---|---|---|---|---|
| - C_{1,1} : Parfumé | - C_{1,2} : Lampes à incandescence | - C_{1,2} : tranquillité en intérieur | - C_{1,4} : Acide | - C_{1,5} : Texture |
| - V_{1,1} = 2/10 | -V_{1,2}=0/10 | | - V_{1,4} = 0/10 | - V_{1,5} < 2/10 |
| - C_{2,1} : Boisé, résineux | | -40 dB <50 dB≤V_{1,3} | - C_{2,4} : Amer | |
| - V_{2,1} = 0/10 | | | - V_{2,4} = 0/10 | |
| - C_{3,1} : Fruité, autre que citron | - C_{2,2} : Lampes | - C_{2,2} : calme enintérieur | - C_{3,4} : Gras | - C_{2,5} : Consistance |
| - V_{3,1} = 4/10 | halogènes - V_{2,2} = 0/10 | - 50 dB ≤V_{2,3} <60 dB | - V_{3,4} = 7/10 | - V_{2,5} > 8/10 |
| - C_{4,1} = Ecoeurant | | | - C_{4,4} : Salé | |
| - V_{4,1} = 0/10 | | | - V_{4,4} = 0/10 | |
| - C_{5,1} : Chimique | - C_{3,2} : Lampes fluocompactes | | - C_{5,4} : Sucré | - C_{3,5} : Chaleur |
| - V_{5,1} = 3/10 | - V_{3,2} = 0/10 | | - V_{5,4} = 8/10 | - V_{3,5} > 7/10 |
| - C_{6,1} : Mentholé, menthe poivrée | | | - C_{6,4} : Umami | |
| - V_{6,1} = 4/10 | | | - V_{6,4} = 0/10 | |
| - C_{7,1} : Sucré | - C_{4,2} : Lampes LED | | | |
| - V_{7,1} = 8/10 | | | | |
| - C_{8,1} : Pop-corn | - V_{4,2} = 8/10 | | | |
| - V_{8,1} = 0/10 | | | | |
| - C_{9,1} : Citronné | | | | |
| - V_{9,1} = 2/10 | | | | |
| - C_{10,1} : Acre, pourri | | | | |
| - V_{10,1} = 0/10 | | | | |

Le tableau [TABᵢ] présente le même format que le tableau [TAB] précité. Pour cette raison, il ne sera pas décrit à nouveau.

Dans le cas par exemple où le lieu public Li est un salon de thé en intérieur :
- pour le profil sensoriel relatif au sens odorat SN1, par exemple la valeur V_{7,1} = 8/10, attribuée à la catégorie C_{7,1} « *sucré* », signifie que le salon de thé dégage une odeur de sucré qui est prépondérante,
- pour le profil sensoriel relatif au sens vue SN2, par exemple la valeur V_{4,2} = 8/10, attribuée à la catégorie C_{4,2} « *lampes LED* », signifie que l'éclairage du salon de thé est réalisé à l'aide de lampes LED en majorité,
- pour le profil sensoriel relatif au sens ouïe SN3, par exemple la valeur 50 dB ≤V_{2,3} <60 dB attribuée à la catégorie C_{2,2} « *calme en intérieur* » signifie que l'ambiance sonore du salon de thé est faible,
- pour le profil sensoriel relatif au sens goût SN4, par exemple, la valeur V_{5,4} = 8/10 attribuée à la catégorie C_{5,4} « *sucré* » signifie que le goût des aliments et/ou des boissons proposées dans ce salon de thé est majoritairement sucré,
- pour le profil sensoriel relatif au sens toucher SN5, par exemple la valeur V_{2,5}>8/10, attribuée à la catégorie C_{2,5} « *consistance* », signifie que le mobilier est plutôt confortable et moelleux.

Le profil PROF_SENS_Li tel que modélisé ci-dessus dans le tableau [TABᵢ] peut être généré une fois pour toute et être utilisé tel quel lors de la mise en oeuvre du procédé de communication qui va être décrit ci-dessous.

Dans une variante de réalisation, le profil PROF_SENS_Li peut être variable dans le temps. A cet effet, l'administrateur/gérant ou propriétaire peut par exemple générer un profil PROF_SENS_Li pour une ou plusieurs tranches horaires dans la journée, par exemple les deux profils suivants :
- PROF_SENS_Lᵢa pour la tranche horaire 8h-16h, où les valeurs d'intensité V_{1,2} et V_{2,2} correspondent à celles du tableau [TABi] pour caractériser une faible ambiance sonore dans cette plage horaire,
- PROF_SENS_Lib pour la tranche 16h-18h, où une valeur d'intensité V_{3,2} sera rendue supérieure à 60db pour caractériser qu'à l'heure du goûter, l'ambiance sonore est élevée.

Selon les choix de l'administrateur/gérant ou propriétaire, chacun de ces 2 profils pourra comprendre par exemple un nombre de sens de l'être humain inférieur aux 5 sens inscrits dans le tableau [TABᵢ], un nombre de catégories par sens inférieur à celui inscrit dans le tableau [TABᵢ], et des notes par catégorie différentes de celles attribuées dans le tableau [TABᵢ].

Ainsi par exemple, l'administrateur/gérant du lieu Li peut décider, lors d'un réaménagement ou de travaux dans le lieu public Lᵢ, de modifier le type d'éclairage et/ou l'intensité de l'éclairage, d'ajouter au menu des tartes salées, de changer le mobilier pour lui donner un caractère plus rustique, etc.

A l'issue de l'étape préalable P12 de génération du profil sensoriel PROF_SENS_Lᵢ, le tableau [TABᵢ] est stocké en P13 dans une base de données BDᵢ et/ou dans la mémoire STTv de l'équipement de communication EC.

A l'issue des phases de configuration P0 et P1 précitées, le procédé de communications e déroule comme suit.

En S1, l'utilisateur UT saisit une requête REQ_L de recherche d'un lieu public sur son terminal TER à l'aide de l'interface utilisateur IU. Il peut s'agir d'une requête textuelle ou orale. Une requête REQ_L peut être par exemple du type ci-dessous :
- « *Je voudrais déjeuner avec mon amie, connaitriez-vous un restaurant calme en centre-ville ?* » ;
   « *J'ai horreur de cette forte odeur de chlore dans ma piscine ; en connaissez-vous une autre qui n'aurait pas ce problème ?* » ;
- « *Je déteste l'éclairage halogène dans ma salle de sport, quelqu'un peut-il me recommander une salle dans laquelle la lumière est moins agressive ?* »,
- « *Je souhaite lire dans un jardin public autour de ma position ».*

En S2, l'interface de communication COMu du terminal TER transmet la requête REQ_L à l'équipement de communication EC, via le réseau RC. La requête REQ_L peut contenir des informations de géolocalisation de l'utilisateur UT, lesquelles ont été déterminées par le module de localisation LOC.

En S3, l'équipement de communication EC reçoit cette requête via son interface de communication COMv.

En S4, est mise en oeuvre une association entre au moins un mot contenu dans la requête REQ_L et une ou plusieurs valeurs d'intensité attribuée à au moins un des cinq sens de l'être humain qui ont été inscrites dans le tableau [TAB].

Selon un premier mode de réalisation, une telle association S4 est mise en oeuvre par le terminal TER préalablement à la transmission S2 de la requête REQ_L. A cet effet, en fonction du et/ou des mots contenu(s) dans la requête REQ_L le terminal TER accède, via l'interface d'accès lAu, au profil PROF_SENS_UT de l'utilisateur, lequel est stocké selon le mode de réalisation envisagé, soit dans la mémoire STTu du terminal TER, soit dans la base de données BDU. Le module ASSu du terminal TER sélectionne alors dans le profil PROF_SENS_UT la/les valeur(s) d'intensité Vs la/les plus adaptée(s) au contenu de la requête REQ_L et la requête REQ_L qui est transmise en S2 à l'équipement de communication EC contient cette/ces valeur(s) d'intensité.

Selon un deuxième mode de réalisation, une telle association S4 est mise en oeuvre par l'équipement de communication EC à la suite de la réception S3 de la requête REQ_L. A cet effet, en fonction du et/ou des mots contenu(s) dans la requête REQ_L et de l'identifiant de communication associé au terminal TER, également transmis dans la requête REQ_L, l'équipement de communication EC accède, via l'interface d'accès lAv, à la base de données BDU contenant le profil PROF_SENS_UT de l'utilisateur UT. Le module d'association ASSv de l'équipement de communication EC sélectionne alors dans le profil PROF_SENS_UT la/les valeur(s) d'intensité Vs la/les plus adaptée(s) au(x) mot(s) contenu(s) dans la requête REQ_L.

En S5, le module de recherche MDR de l'équipement de communication EC procède à une recherche, via le réseau RC, d'un ou de plusieurs lieux publics parmi les M lieux publics dont les profils sensoriels correspondants sont accessibles dans les bases de données BD₁ à BD_{M}. En particulier, le module MDR recherche le ou les lieux publics L₁, ..., L_{M} qui a/ont un type qui correspond au type de lieu public contenu dans la requête de recherche REQ_L, par exemple « *restaurant* », « *piscine* », « *salle de sport* », « *jardin public* », etc., après avoir accédé aux bases de données BD₁ à BD_{M}, via l'interface d'accès lAv.

En S6, le module sélection SEL sélectionne, parmi le/les lieu(x) public(s) trouvé(s) par le module de recherche MDR, un ou Q lieux publics L₁, ..., La parmi M, tel que 1≤Q≤M, dont la ou les valeurs d'intensité Vs' se rapprochent le plus de la ou des valeurs Vs sélectionnée(s) en S4 dans le profil sensoriel PRO_SENS_UT de l'utilisateur UT.

En S7, le module MGC de l'équipement de communication EC génère un contenu CONT comprenant des informations d'identification du/des Q lieu(x) public(s) sélectionné(s) en S6. Il peut s'agir par exemple d'une page Web listant le nom et/ou l'adresse du ou des Q lieu(x) public(s) sélectionné(s) par ordre de pertinence par rapport au contenu de la requête RQ_L, d'une carte géographique repérant le ou les Q lieux publics sélectionnés, avec indication de leurs noms et adresses respectives, d'un lien vers un fichier audio énonçant oralement le nom et/ou l'adresse du ou des Q lieu(x) public(s) sélectionné(s), d'un fichier audio énonçant oralement le nom et/ou l'adresse du ou des Q lieu(x) public(s) sélectionné(s), etc.

En S8, l'interface de communication COMv de l'équipement de communication EC transmet le contenu CONT au terminal TER, via le réseau RC.

En S9, le terminal TER reçoit le contenu CONT, via son interface de communication COMu.

En S10, le module de restitution RES du terminal TER restitue le contenu CONT sur un écran de l'interface utilisateur IU, si le contenu CONT est de type textuel ou graphique, ou bien oralement via au moins un haut-parleur de l'interface utilisateur IU, si le contenu CONT est de type audio.

Dans le mode de réalisation qui vient d'être décrit ci-dessus, certaines actions, par exemple les actions S4, S5, S6, peuvent être mises en oeuvre à l'aide d'un réseau neuronal, être basées sur la technologie d'apprentissage profond (« *Deep Learning* » en anglais) ou sur la technologie d'apprentissage statistique, etc.

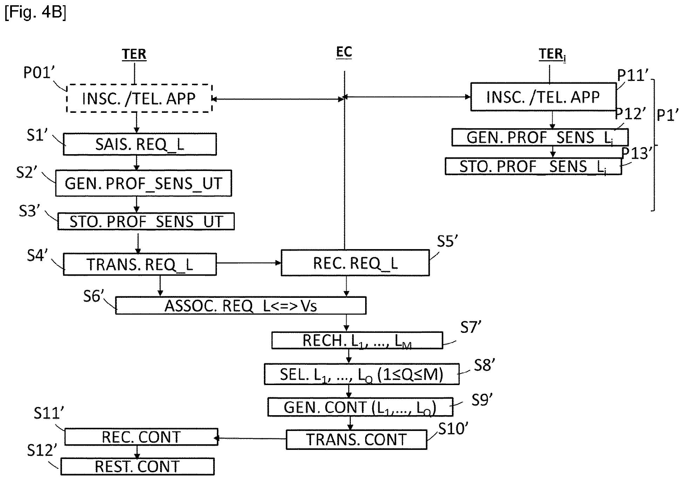

On décrit maintenant, en relation avec la figure 4B, ensemble les figures 1 à 3, le déroulement d'un procédé de communication, selon un autre mode de réalisation particulier de l'invention.

Conformément à cet autre mode de réalisation, les étapes de configuration préalables P02 et P03 de la figure 4A ne sont pas mises en oeuvre. La génération du profil sensoriel PROF_SENS_UT est alors mise en oeuvre à chaque requête de recherche d'un lieu public saisie par l'utilisateur UT.

Le procédé de communication selon cet autre mode de réalisation peut contenir une étape préalable P01' d'inscription préalable de l'utilisateur UT auprès de l'équipement de communication EC. Cette étape étant identique à l'étape P01 de la figure 4A, elle ne sera pas décrite à nouveau. Cette étape P01' étant optionnelle, elle est représentée en pointillé sur la figure 4B.

De manière identique au mode de réalisation de la figure 4A, le terminal TERi de l'administrateur/gérant ou propriétaire d'un lieu Li met en oeuvre une phase de configuration préalable P1', identique à l'étape de configuration préalable P1. A cet effet, la phase de configuration préalable P1' comprend, côté gérant/administrateur ou propriétaire d'un lieu public Lᵢ, des actions P11', P12', P13' respectivement identiques aux actions P11, P12, P13 décrites en référence à la figure 4A. Un tableau [TABi'] identique au tableau [TABᵢ] est alors généré au cours de la phase de configuration préalable P1'.

A l'issue des étapes préalables P01 ' le cas échéant, et P11', P12', P13', le procédé de communication selon cet autre mode de réalisation, met en oeuvre ce qui suit.

En S1', l'utilisateur UT saisit une requête REQ_L de recherche d'un lieu public sur son terminal TER à l'aide de l'interface utilisateur IU. Une telle action étant identique à l'action S1 de la figure 4A, elle ne sera pas décrite plus avant.

En S2', un profil sensoriel PROF_SENS_UT de l'utilisateur UT est généré de la façon suivante. Un questionnaire numérique est restitué sur l'interface utilisateur IU, soit sous forme de rubriques à remplir par l'utilisateur UT, sois sous forme d'une succession de questions auxquelles doit répondre l'utilisateur UT. Les questions sont pertinentes par rapport à un mot ou plusieurs mots saisis par l'utilisateur UT en S1'. Ainsi, par exemple, si la requête RQ_L saisie en S1' : « *boire un verre dans mon quartier* », la série de questions suivantes est par exemple posée à l'utilisateur UT :

### « Lorsque vous sortez dans un bar avec vos amis, vous appréciez plutôt :

- *Un bar sans musique, une atmosphère très feutrée ;*
- *Un bar avec une musique d'ambiance pas trop forte, une atmosphère relativement calme ;*
- *Un bar avec de la musique forte, une atmosphère de feu* ! ».

A l'issue de la réponse à ce questionnaire, un profil sensoriel PROF_SENS_UT de l'utilisateur UT est généré soit par le terminal TER, soit par l'équipement de communication EC, sous la forme d'un tableau [TAB'] ayant le même format que le tableau [TAB] précité. Un tel tableau [TAB'] peut être incomplet par rapport au tableau [TAB] si la requête RQ_L ne concerne par exemple qu'un unique sens de l'être humain, par exemple l'ouïe SN3 dans l'exemple décrit ici.

Dans un mode de réalisation alternatif ou complémentaire, le tableau [TAB'] peut être généré en S2' à la volée ou au cours du temps, en exploitant certaines traces numériques générées par l'utilisateur UT lorsque ce dernier communique à l'aide du terminal de communication TER ou de tout autre terminal de communication, par exemple via sa messagerie électronique, via des messages de type SMS (« *Short Message Service* » en anglais), via des vidéos, des commentaires, etc. qui sont postés sur des réseaux sociaux, notamment en relation avec des lieux publics, etc., à condition bien sûr que le terminal TER ait été identifié dans le réseau de communication RC. De tels messages, commentaires ou avis sont par exemple les suivants :
*« Je suis allée à la piscine « A » hier soir : elle a une forte odeur de chlore »,*
*« Le restaurant B est très bruyant le samedi soir, mais le mobilier y est très confortable* »*,*
*« Le parc « C » en centre-ville est très lumineux et a une légère odeur de citron ».*

D'autres données, telles que par exemple des données stockées dans la mémoire STTu du terminal TER, peuvent être également exploitées pour générer le tableau [TAB']. Il peut s'agir par exemple des informations du journal d'appel du terminal TER, de cookies, d'informations de géolocalisation déterminées par le module de géolocalisation LOC, etc.

Dans un autre mode de réalisation alternatif ou complémentaire, le tableau [TAB'] peut être généré en S2' à la volée ou au cours du temps, à partir de l'exploitation de certaines traces numériques laissées par l'utilisateur UT telles que mentionnées ci-dessus, et de l'apprentissage, par exemple par un module d'intelligence artificielle utilisant notamment des techniques d'apprentissage automatique (« *Machine Learning* » en anglais) et divers traitements de langage naturel dans le cas notamment où les actions de l'utilisateur UT avec son terminal TER sont des communications écrites ou orales, d'au moins un type de personnalité particulier de l'utilisateur, ledit au moins un type étant corrélé à certaines préférences sensorielles de l'utilisateur UT. L'attribution d'un ou de plusieurs types de personnalité à l'utilisateur se base par exemple le modèle des Big 5 tel que décrit dans le document : « Goldberg, L. R. (1981). Language and individuel différences: The search for universels in personality lexicons. In Wheeler (Ed.), Review of Personality and social psychology, Vol. 1, 141-165. Beverly Hills, CA: Sage *».* Ce modèle permet de décrire la personnalité en utilisant les cinq types principaux suivants :
- L'ouverture : appréciation de l'art, de l'émotion, de l'aventure, des idées peu communes, curiosité et imagination ;
- La conscienciosité : autodiscipline, respect des obligations, organisation plutôt que spontanéité ; orienté vers des buts ;
- L'extraversion : énergie, émotions positives, tendance à chercher la stimulation et la compagnie des autres, fonceur ;
- L'agréabilité : tendance à être compatissant et coopératif plutôt que soupçonneux et antagonique envers les autres ;
- Le neuroticisme : tendance à éprouver facilement des émotions désagréables comme la colère, l'inquiétude ou la dépression.

A l'issue de l'apprentissage des types de personnalités basé sur ce modèle, l'utilisateur UT est évalué cinq fois différemment, selon les cinq types précités. En pratique, une note pour chacun des cinq types (par exemple 1, 2, 3, 4 ou 5) est attribuée à l'utilisateur. La personnalité de l'utilisateur est donc décrite par cinq notes différentes (une note relative à l'ouverture, une note relative à la conscienciosité, une note relative à l'extraversion, une note relative à l'agréabilité et enfin une note relative au neuroticisme). Ainsi, par exemple, pour le type « extraversion », est attribuée à l'utilisateur une note allant de 1 à 5 selon son niveau d'extraversion, la note minimale 1/5 correspondant à une personnalité très introvertie et la note maximale 5/5 correspondant à une personnalité très extravertie. Le module d'intelligence artificielle est en outre configuré pour corréler les différentes notes attribuées aux types de personnalité de l'utilisateur UT à au moins une valeur d'intensité d'au moins un des cinq sens de l'être humain, parmi les sens SN1 à SN5 précités. Dans un exemple de réalisation, si à partir de traces numériques, l'utilisateur UT est identifié comme étant très introverti, la note 1/5 ayant été attribuée à « extraversion », le module d'intelligence artificielle en déduira que l'utilisateur UT a tendance à rechercher des lieux publics sans un éclairage trop intense et/ou dont l'ambiance sonore est faible. Par conséquent, le module d'intelligence artificielle corrélera la note 1/5 attribuée à « *extraversion* » à par exemple des valeurs d'intensité V_{1,2} à V_{4,2} du sens vue SN2 de l'ordre de 2/10 et à des valeurs d'intensité 40 dB ≤V_{1,3} <50 dB et 50 dB ≤V_{2,3} <60 dB pour le sens ouïe SN3.

A l'issue de l'étape de génération S2' du profil sensoriel PROF_SENS_UT, le tableau [TAB'] est stocké en S3' dans la base de données BDU et/ou dans la mémoire STTu du terminal TER.

Le procédé de communication selon cet autre mode de réalisation se poursuit par la mise en oeuvre des actions S4' à S12' qui sont respectivement identiques ou similaires aux actions S2 à S10 de la figure 4A, et qui, de ce fait, ne seront pas décrites à nouveau.

## Revendications

1. Procédé de communication entre un terminal (TER) et un équipement de communication (EC), via un réseau de communication, au cours de laquelle le terminal requiert (S1) l'obtention d'un contenu (CONT) auprès dudit équipement, ledit contenu étant relatif à un lieu accueillant du public, **caractérisé en ce qu'**il met en oeuvre :
- une transmission (S2) du terminal audit équipement, via ledit réseau, d'une requête (RQ_L) de recherche d'au moins un lieu accueillant du public, ladite requête comprenant au moins un type de lieu et au moins un mot caractérisant le type de lieu, ledit au moins un mot étant associé (S4) à une première valeur (Vs) d'intensité attribuée à au moins un sens de l'être humain,
- une sélection (S6), dans ledit réseau, d'un ou de plusieurs lieux accueillant du public, pour le(s)quel(s) une deuxième valeur (Vs') d'intensité dudit au moins un sens a été attribuée et dont la deuxième valeur s'approche le plus de la première valeur,
- en réponse à la requête, une réception (S9) dans le terminal, en provenance dudit équipement, d'un contenu comprenant des informations d'identification du ou des lieu(x) sélectionné(s).

2. Procédé de communication selon la revendication 1, dans lequel :
- la première valeur d'intensité (Vs) dudit au moins un sens appartient à un profil (PROF_SENS_UT) d'un utilisateur du terminal, ledit profil contenant des préférences sensorielles de l'utilisateur relativement à un ou plusieurs sens de l'être humain,
- la deuxième valeur d'intensité (Vs') dudit au moins un sens appartient à un profil (PROF-SENS_Li) d'au moins un lieu, ledit profil contenant des caractéristiques sensorielles propres audit lieu, relativement à un ou plusieurs sens de l'être humain.

3. Procédé de communication selon la revendication 2, dans lequel le profil de l'utilisateur du terminal est généré (S4) en une seule fois préalablement à la mise en oeuvre du procédé ou est généré (S2') en association avec chaque requête de recherche.

4. Procédé de communication selon la revendication 3, dans lequel le profil de l'utilisateur du terminal est généré (S2') à partir de réponses de l'utilisateur à un questionnaire numérique reçu par ledit terminal ou un autre terminal en provenance dudit équipement de communication, ledit questionnaire interrogeant l'utilisateur sur ses préférences en rapport avec au moins un sens de l'être humain.

5. Procédé de communication selon la revendication 3, dans lequel le profil de l'utilisateur du terminal est généré (S2') à partir d'un ou plusieurs messages de l'utilisateur qui ont été publiés, via ledit réseau de communication, le ou les messages étant relatifs à un ou plusieurs lieux accueillant du public, en rapport avec au moins un des sens de l'être humain.

6. Procédé de communication selon la revendication 3, dans lequel le profil de l'utilisateur du terminal est généré (S2') à partir d'une ou plusieurs traces numériques laissées par l'utilisateur, lors d'une ou plusieurs communications à l'aide dudit terminal, via ledit réseau de communication.

7. Procédé de communication selon l'une quelconque des revendications 2 à 6, dans lequel la première valeur d'intensité (Vs) dudit au moins un sens du profil de l'utilisateur du terminal, respectivement la deuxième valeur d'intensité (Vs') dudit au moins un sens du profil dudit au moins un lieu, sont variables ou invariables dans le temps.

8. Terminal de communication (TER) adapté pour mettre en oeuvre une communication, via un réseau de communication, avec un équipement de communication, au cours de laquelle le terminal requiert l'obtention d'un contenu auprès dudit équipement, ledit contenu étant relatif à un lieu accueillant du public, **caractérisé en ce qu'**il est configuré pour :
- transmettre audit équipement de communication, via ledit réseau, une requête de recherche d'au moins un lieu accueillant du public, ladite requête comprenant au moins un type de lieu accueillant du public et au moins un mot caractérisant ledit type de lieu, ledit au moins un mot étant associé à une première valeur d'intensité attribuée à au moins un sens de l'être humain,
- en réponse à la requête, recevoir en provenance dudit équipement, via ledit réseau, un contenu comprenant des informations d'identification d'un ou de plusieurs lieux pour le(s)quel(s) une deuxième valeur d'intensité dudit au moins un sens a été attribuée et dont la deuxième valeur s'approche le plus de la première valeur.

9. Equipement de communication (EC), adapté pour mettre en oeuvre une communication, via un réseau de communication, avec un terminal de communication, au cours de laquelle le terminal requiert l'obtention d'un contenu auprès dudit équipement, ledit contenu étant relatif à un lieu accueillant du public, **caractérisé en ce que** ledit équipement est configuré pour :
- recevoir en provenance du terminal, via ledit réseau, une requête de recherche d'au moins un lieu accueillant du public, ladite requête comprenant au moins un type de lieu accueillant du public et au moins un mot caractérisant ledit type de lieu, ledit au moins un mot étant associé à une première valeur d'intensité attribuée à au moins un sens de l'être humain,
- sélectionner, dans ledit réseau, un ou plusieurs lieux accueillant du public, pour le(s)quel(s) une deuxième valeur d'intensité dudit au moins un sens a été attribuée et dont la deuxième valeur s'approche le plus de la première valeur,
- en réponse à la requête, transmettre audit terminal, via ledit réseau, un contenu comprenant des informations d'identification du ou des lieu(x) accueillant du public sélectionné(s).

10. Programme d'ordinateur comportant des instructions de code de programme pour la mise en oeuvre du procédé de communication selon l'une quelconque des revendications 1 à 7, lorsqu'il est exécuté sur un ordinateur.

11. Support d'informations lisible par un ordinateur, et comportant des instructions d'un programme d'ordinateur selon la revendication 10.
